(19) **Europäisches Patentamt / European Patent Office / Office européen des brevets**

(11) **EP 3 978 543 A1**

(12) **EUROPEAN PATENT APPLICATION**
published in accordance with Art. 153(4) EPC

(43) Date of publication:
06.04.2022 Bulletin 2022/14

(21) Application number: 20814279.4

(22) Date of filing: 28.05.2020

(51) International Patent Classification (IPC):
C08F 210/06 (2006.01)    C08L 23/08 (2006.01)
C08L 23/12 (2006.01)    C08L 23/14 (2006.01)

(52) Cooperative Patent Classification (CPC):
C08F 210/06; C08L 23/08; C08L 23/12;
C08L 23/14

(86) International application number:
PCT/JP2020/021087

(87) International publication number:
WO 2020/241740 (03.12.2020 Gazette 2020/49)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.05.2019 JP 2019100232

(71) Applicant: Mitsui Chemicals, Inc.
Tokyo 105-7122 (JP)

(72) Inventors:
• MIZUMA Takahiro
Ichihara-shi, Chiba 299-0108 (JP)
• OKU Tatsuya
Singapore 099254 (SG)
• KAMIYA Nozomi
Ichihara-shi, Chiba 299-0108 (JP)
• NODA Kiminori
Ichihara-shi, Chiba 299-0108 (JP)
• NAKAMURA Tetsuya
Ichihara-shi, Chiba 299-0108 (JP)
• EGAWA Makoto
Ichihara-shi, Chiba 299-0108 (JP)
• KAI Yuki
Ichihara-shi, Chiba 299-0108 (JP)
• HOYA Hiroshi
Ichihara-shi, Chiba 299-0108 (JP)

(74) Representative: Hoffmann Eitle
Patent- und Rechtsanwälte PartmbB
Arabellastraße 30
81925 München (DE)

(54) **PROPYLENE-ETHYLENE-ALPHA-OLEFIN COPOLYMER, PROPYLENE POLYMER COMPOSITION AND USE THEREFOR**

(57) An embodiment of the present invention relates to a propylene-ethylene-$\alpha$-olefin copolymer, a polypropylene composition, an adhesive resin composition, a pellet, a molded article, a non-oriented film, a sheet, an injection molded article, a blow molded article, or an automobile component, and the copolymer satisfies the requirements (I) to (V): (I) a content of a propylene-derived constituent unit (i) is 50 to 92 mol%, a content of an ethylene-derived constituent unit (ii) is 5 to 20 mol%, and a content of a C4-20 $\alpha$-olefin-derived constituent unit (iii) is 3 to 30 mol%, provided that the constituent units (i) to (iii) in total is 100 mol%; (II) an mm fraction calculated by $^{13}$C-NMR is 85% or more; (III) $0.9 \le M_{OE}/(2M_O \times M_E) \le 1.5$ wherein $M_{OE}$ represents a mole fraction of chains of propylene and ethylene and chains of the C4-20 $\alpha$-olefin and ethylene in total to the total dyad, $M_O$ represents mole fractions of propylene and the C4-20 $\alpha$-olefin in total, and $M_E$ represents a mole fraction of ethylene; (IV) an MFR is 1 to 3 g/10 minutes; and (V) a melting point measured by DSC is less than 100°C, or no melting peak is observed.

EP 3 978 543 A1

**Description**

Technical Field

An embodiment of the present invention relates to a propylene-ethylene-α-olefin copolymer, a polypropylene composition, an adhesive resin composition, a pellet, a molded article, a non-oriented film, a sheet, an injection molded article, a blow molded article, or an automobile component.

Background Art

In recent years, propylene polymers (propylene-based polymers) having propylene as the main monomer have been known as soft materials consisting of a polyolefin having environmental aptitude and hygiene with excellent flexibility, heat resistance, and transparency.

At present, various uses of polypropylene compositions comprising such a propylene polymer have been increasing; however, the performances of the propylene polymers that are currently used are not sufficient and have been posing problems such as a low molecular weight and/or low crystallinity propylene polymer component bleeding out at a high temperature and eluting in, for example, an oil, and further have been factors to aggravate the surface properties and heat resistance of a molded article at a high temperature.

Patent Literature 1 states that a film (sheet) consisting of a polypropylene composition, when exposed to 60°C, has changes in the appearance due to the bleed out of, for example, a low molecular weight component.

Further, Patent Literature 2 discloses that a sticky component can be reduced (excellent stickiness resistance can be achieved) when a propylene polymer having specific ranges of an isotactic pentad fraction, a molecular weight distribution, and a limiting viscosity is used.

Citation List

Patent Literature

Patent Literature 1: JP-A-2006-265281
Patent Literature 2: JP-A-2009-13424

Summary of Invention

Technical Problem

When molded articles comprising a propylene polymer are used for, for example, a packing material such as a film sheet, a medical application, or an automobile interior part, the molded articles are required to have a small amount of component eluted in, for example, an oil and excellent stickiness resistance and heat resistance (shrinkage resistance, substantially maintained thickness and appearance) at a high temperature (example: 80°C or more). However, when the propylene polymers described in Patent Literatures 1 and 2 are used, the stickiness resistance at a high temperature (example: 80°C or more) still needs to be improved.

An embodiment of the present invention provides a propylene polymer and a polypropylene composition with, together with excellent flexibility, excellent heat resistance such as stickiness resistance, shrinkage resistance, thickness retainability, and appearance retainability even when used at a high temperature for an extended period of time, and further with a small amount of component eluted in, for example, an oil.

Solution to Problem

Examples of aspects of the present invention are as follow.
Note that "A to B" expressing a numerical value range herein represents A or more and B or less.
[1] A propylene-ethylene-α-olefin copolymer (A) satisfying the following requirements (I) to (V):

(I) a content of a propylene-derived constituent unit (i) is 50 to 92 mol%, a content of an ethylene-derived constituent unit (ii) is 5 to 20 mol%, and a content of a C4-20 α-olefin-derived constituent unit (iii) is 3 to 30 mol%, provided that the constituent units (i) to (iii) in total is 100 mol%;
(II) an isotactic triad fraction (mm fraction) calculated by $^{13}$C-NMR is 85% or more;
(III) a B value specified by $B = M_{OE}/(2M_O \times M_E)$ is 0.9 to 1.5 wherein $M_{OE}$ represents a mole fraction of chains of propylene and ethylene and chains of the C4-20 $\alpha$-olefin and ethylene in total to the total dyad, $M_O$ represents mole fractions of propylene and the C4-20 $\alpha$-olefin in total, and $M_E$ represents a mole fraction of ethylene;
(IV) a melt flow rate (MFR) is 1 to 3 g/10 minutes; and
(V) a melting point (Tm) measured by a differential scanning calorimeter (DSC) is less than 100°C, or no melting peak is observed.

[2] The propylene-ethylene-$\alpha$-olefin copolymer (A) according to [1], satisfying the following requirement (VI):
(VI) no melting peak is observed by a differential scanning calorimeter (DSC), or a heat of fusion ($\Delta$H) by a differential scanning calorimeter (DSC) is 10 to 50 J/g.
[3] The propylene-ethylene-$\alpha$-olefin copolymer (A) according to [1] or [2], satisfying at least one of the following requirements (VII) and (VIII):

(VII) a content of the propylene-derived constituent unit (i) is 61 to 85 mol%, a content of the ethylene-derived constituent unit (ii) is 6 to 14 mol%, and a content of the C4-20 $\alpha$-olefin-derived constituent unit (iii) is 5 to 24 mol%, provided that the constituent units (i) to (iii) in total is 100 mol%; and
(VIII) no melting peak is observed by a differential scanning calorimeter (DSC), or a heat of fusion ($\Delta$H) by a differential scanning calorimeter (DSC) is 20 to 40 J/g.

[4] A polypropylene composition comprising the propylene-ethylene-$\alpha$-olefin copolymer (A) according to any of [1] to [3].
[5] The polypropylene composition according to [4] comprising a propylene polymer (B) satisfying the following requirements (1) and (2):

(1) a melting point (Tm) measured by a differential scanning calorimeter (DSC) is 110 to 170°C; and
(2) an isotactic pentad fraction (mmmm fraction) is 90% or more.

[6] The polypropylene composition according to [4] or [5], comprising an ethylene-$\alpha$-olefin copolymer (C) containing an ethylene-derived constituent unit in an amount of 50 to 99 mol% and a C3-20 $\alpha$-olefin-derived constituent unit in an amount of 1 to 50 mol%, provided that the ethylene- and $\alpha$-olefin-derived constituent units in total is 100 mol%.
[7] An adhesive resin composition containing the propylene-ethylene-$\alpha$-olefin copolymer (A) according to any of [1] to [3], or the polypropylene composition according to any of [4] to [6].
[8] A pellet containing the propylene-ethylene-$\alpha$-olefin copolymer (A) according to any of [1] to [3], or the polypropylene composition according to any of [4] to [6].
[9] A molded article containing the propylene-ethylene-$\alpha$-olefin copolymer (A) according to any of [1] to [3], or the polypropylene composition according to any of [4] to [6].
[10] A non-oriented film containing the propylene-ethylene-$\alpha$-olefin copolymer (A) according to any of [1] to [3], or the polypropylene composition according to any of [4] to [6].
[11] A sheet containing the propylene-ethylene-$\alpha$-olefin copolymer (A) according to any of [1] to [3], or the polypropylene composition according to any of [4] to [6].
[12] An injection molded article containing the propylene-ethylene-$\alpha$-olefin copolymer (A) according to any of [1] to [3], or the polypropylene composition according to any of [4] to [6].
[13] A blow molded article containing the propylene-ethylene-$\alpha$-olefin copolymer (A) according to any of [1] to [3], or the polypropylene composition according to any of [4] to [6].
[14] An automobile component selected from interior part and exterior components, containing the propylene-ethylene-$\alpha$-olefin copolymer (A) according to any of [1] to [3], or the polypropylene composition according to any of [4] to [6].

Advantageous Effects of Invention

According to an embodiment of the present invention, provided are a propylene polymer and a polypropylene composition with, together with excellent flexibility, excellent heat resistance such as stickiness resistance, shrinkage resistance, thickness retainability, and appearance retainability even when used at a high temperature for an extended period of time, and further with a small amount of component eluted in, for example, an oil.
Further, according to an embodiment of the present invention, provided are a propylene polymer and a polypropylene composition with excellent flexibility and a small amount of component eluted in, for example, an oil, a polypropylene composition with excellent heat seal strength, heat shrinkage resistance, and stickiness resistance even when used at a high temperature for an extended period of time and being capable of maintaining the heat seal strength even at a high temperature, a polypropylene composition with excellent whitening resistance when stretched and being capable of forming a molded article with excellent whitening resistance when stretched even after treated at a high temperature, and a polypropylene composition with excellent flexibility and a small amount of component eluted in, for example, an oil and being capable of maintaining the gloss even after treated at a high temperature.

Note that examples of the oil include hexane and n-heptane.

Description of Embodiments

«Propylene-ethylene-$\alpha$-olefin copolymer (A)»

The propylene-ethylene-$\alpha$-olefin copolymer (A) according to an embodiment of the present invention (hereinafter also simply referred to as the "copolymer (A)") satisfies the following requirements (I) to (V):

(I) a content of a propylene-derived constituent unit (i) is 50 to 92 mol%, a content of an ethylene-derived constituent unit (ii) is 5 to 20 mol%, and a content of a C4-20 $\alpha$-olefin-derived constituent unit (iii) is 3 to 30 mol%, provided that the constituent units (i) to (iii) in total is 100 mol%;
(II) an isotactic triad fraction (mm fraction) calculated by $^{13}$C-NMR is 85% or more;
(III) a B value specified by $B = M_{OE}/ (2M_O \times M_E)$ is 0.9 to 1.5 wherein $M_{OE}$ represents a mole fraction of chains of propylene and ethylene and chains of the C4-20 $\alpha$-olefin and ethylene in total to the total dyad, $M_O$ represents mole fractions of propylene and the C4-20 $\alpha$-olefin in total, and $M_E$ represents a mole fraction of ethylene;
(IV) a melt flow rate (MFR) is 1 to 3 g/10 minutes; and
(V) a melting point (Tm) measured by a differential scanning calorimeter (DSC) is less than 100°C, or no melting peak is observed.

The copolymer (A) provides the above described effects and, in particular, has excellent flexibility and a small amount of component eluted in, for example, an oil.

The copolymer (A) is not particularly limited, and is preferably a random copolymer.

A content of the constituent unit (i) is 50 mol% or more, preferably 55 mol% or more, more preferably 60 mol% or more, and particularly preferably 61 mol% or more, and is 92 mol% or less, preferably 90 mol% or less, more preferably 88 mol% or less, further preferably 86 mol% or less, and particularly preferably 85 mol% or less.

A content of the constituent unit (ii) is 5 mol% or more, and preferably 6 mol% or more, and is 20 mol% or less, preferably 18 mol% or less, and more preferably 14 mol% or less.

A content of the constituent unit (iii) is 3 mol% or more, and preferably 5 mol% or more, and is 30 mol% or less, preferably 25 mol% or less, and particularly preferably 24 mol% or less.

Further, the total content of the constituent units (ii) and (iii) with respect to 100 mol% in total of the constituent units (i) to (iii) is preferably 10 to 45 mol%, and more preferably 12 to 45 mol%.

Each content of the constituent units (i) to (iii) is the content when the constituent units (i) to (iii) in total is 100 mol%.

When a content of the constituent units (i) to (iii) is in the range, the transparency, flexibility, mechanical strengths, heat resistance, and impact resistance tend to be well balanced and the compatibility with the propylene polymer (B) below tends to be good.

The content of the constituent units (i) to (iii) can be measured by $^{13}$C-NMR and, specifically, can be measured by the method described in JP-A-2007-186664.

Examples of the C4-20 $\alpha$-olefin include 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosen, and 1-butene, 4-methyl-1-pentene, 1-hexene, and 1-octene are preferable, and 1-butene is more preferable.

Two or more kinds of the C4-20 $\alpha$-olefins can be used, but one kind is preferable.

The mm fraction of the copolymer (A) is 85% or more, preferably 87% or more, and more preferably 89% or more.

A molded article, particularly an injection molded article, comprising the copolymer (A) having an mm fraction in the range is well balanced in the flowability, mechanical strengths, and impact resistance.

The mm fraction can be measured and analyzed by the method described in JP-A-2007-186664.

A molecular weight distribution (Mw/Mn [Mw and Mn are, respectively, a weight average molecular weight and a number average molecular weight in terms of polystyrene]) of the copolymer (A) is preferably 3.5 or less, more preferably 3.0 or less, and further preferably 2.5 or less.

When a molecular weight distribution is in the range, the mechanical strengths, impact resistance, and low stickiness property are well balanced.

An Mw of the copolymer (A) is preferably 10,000 to 10,000,000, and more preferably 10,000 to 1,000,000.

When an Mw is in the range, the moldability, mechanical strengths, impact resistance, and low stickiness property are well balanced.

The above Mw and Mn are the values, specifically, measured by the method described in Examples below.

An MFR of the copolymer (A) is 1 g/10 minutes or more, preferably 1.3 g/10 minutes or more, and more preferably 1.4 g/10 minutes or more, and is 3 g/10 minutes or less, and preferably 2.8 g/10 minutes or less.

When an MFR is in the range, the moldability, mechanical strengths, impact resistance, and low stickiness property are well balanced.

Note that when an MFR is less than the lower limit of the range, the flowability reduces thereby making the molding difficult and the compatibility with other resins tends to reduce, whereas when an MFR is more than the upper limit of the range, a sticky component tends to increase.

The MFR is the value measured in conformity with ASTM D1238 at 230°C with a load of 2.16 kg.

The copolymer (A) has a Tm of less than 100°C when measured by DSC, or has no melting peak observed, and when a melting peak is observed, the Tm is preferably 90°C or less, and more preferably 85°C or less.

When a Tm is in the range, or when a melting peak is not observed, a molded article with excellent flexibility can be easily obtained.

The melting peak can be measured, specifically, by the method described in Examples below, and the Tm herein refers to the peak top temperature of melting peak, and no melting peak is observed refers to that no crystal melting peak having a heat of crystal fusion of 1 J/g or more in a range from -100 to 200°C is observed. Note that when two or more melting peaks are observed, the lowest temperature of the peak top temperature of these peaks is the melting point.

When the melting peaks are observed, a heat of fusion (ΔH), an integrated value of the peaks, is preferably 10 J/g or more, and more preferably 20 J/g or more, and is preferably 50 J/g or less, more preferably 45 J/g or less, and further preferably 40 J/g or less.

When a ΔH is in the range, the flexibility and low stickiness property are well balanced.

A B value of the copolymer (A) calculated by the following formula (1) is 0.9 to 1.5, and preferably 0.9 to 1.2.

When a B value is in the range, the compatibility with the propylene polymer (B) is more excellent, hence preferable.

The B value is the value determined by the method described in JP-A-2007-186664.

$$B = M_{OE}/(2M_O \times M_E) \quad \cdots \quad (1)$$

wherein $M_{OE}$ represents a mole fraction of chains of propylene and ethylene and chains of the C4-20 $\alpha$-olefin and ethylene in total to the total dyad, $M_O$ represents mole fractions of propylene and the C4-20 $\alpha$-olefin in total, and $M_E$ represents a mole fraction of ethylene.

A tensile elasticity of the copolymer (A) is preferably 0.5 MPa or more, and more preferably 1 MPa or more, and is preferably 200 MPa or less, and more preferably 150 MPa or less.

When a tensile elasticity is in the range, a molded article with more excellent flexibility can be easily obtained.

The tensile elasticity is the value measured in conformity with ASTM D638, using an ASTM type 4 dumbbell, under the conditions of 23°C and a tension rate: 50 mm/min.

A shore A hardness (instantaneous value) of the copolymer (A) is preferably 20 to 97, and more preferably 30 to 97.

In particular, a shore A hardness (instantaneous value) of the copolymer (A) having a tensile elasticity of 10 MPa or less is preferably 20 or more, and more preferably 30 or more, and is preferably 50 or less, and more preferably 45 or less. Further, a shore A hardness (instantaneous value) of the copolymer (A) having a tensile elasticity of more than 10 MPa is preferably 51 or more, and more preferably 71 or more, and is preferably 97 or less.

When a shore A hardness (instantaneous value) is in the range, a molded article with more excellent flexibility can be easily obtained.

The shore A hardness (instantaneous value) is the value measured by the method described in Examples below.

The method for producing the copolymer (A) is not particularly limited and the copolymer (A) can be produced by copolymerizing olefins in the presence of a known catalyst, for example, a catalyst having a solid titanium component and an organic metal compound as the main components, or a metallocene catalyst in which a metallocene compound is used as a component of the catalyst. Preferably, as will be described later, the copolymer (A) can be obtained by copolymerizing propylene, ethylene, and a C4-20 $\alpha$-olefin in the presence of a metallocene catalyst, and for such a catalyst, the catalysts described in, for example, WO 2004/087775 and JP-A-2007-186664 can be used.

«Polypropylene composition»

The polypropylene composition according to an embodiment of the present invention (hereinafter also simply referred to as the "present composition") comprises the copolymer (A).

Examples of the present composition specifically include

a polypropylene composition (X1) comprising the copolymer (A) and a propylene polymer(B) satisfying the following requirements (1) and (2) (hereinafter also simply referred to as the "polymer (B)"), and
a polypropylene composition (X2) comprising the copolymer (A) and an ethylene-$\alpha$-olefin copolymer (C) containing an ethylene-derived constituent unit in an amount of 50 to 99 mol% and a C3-20 $\alpha$-olefin-derived constituent unit in an amount of 1 to 50 mol%, provided that the ethylene- and $\alpha$-olefin-derived constituent units in total is 100 mol% (hereinafter also simply referred to as the "copolymer (C)").

< polypropylene composition (X1)>

The polypropylene composition (X1) (hereinafter also simply referred to as the "composition (X1)") comprises the copolymer (A) and the polymer (B).

Such a composition (X1) accordingly has excellent heat seal strength, heat shrinkage resistance, and stickiness resistance even when used at a high temperature for an extended period of time and is capable of maintaining the heat seal strength even at a high temperature, and further has excellent flexibility and a small amount of component eluted in, for example, an oil and is capable of maintaining the gloss even after treated at a high temperature.

The copolymer (A) comprised in the composition (X1) can be one kind, or two or more kinds, and the polymer (B) comprised in the composition (X1) can also be one kind, or two or more kinds.

The content of the copolymer (A) with respect to 100 wt% of the copolymer (A) and the polymer (B) in total in the composition (X1) is preferably 1 wt% or more, and more preferably 5 wt% or more, and is preferably 99 wt% or less, more preferably 95 wt% or less, and particularly preferably 90 wt% or less, and the content of the polymer (B) is preferably 1 wt% or more, more preferably 5 wt% or more, and particularly preferably 10 wt% or more, and is preferably 99 wt% or less, and more preferably 95 wt% or less.

When the contents of the copolymer (A) and the polymer (B) are in these ranges, a molded article with excellent transparency, impact strength, mechanical properties (for example, flexibility or rigidity), and impact resistance, particularly with excellent balance in the rigidity and low temperature impact resistance, and transparency can be easily obtained.

When two or more kinds of the copolymers (A) are used, the content of the copolymer (A) refers to the total amount of these two or more kinds of the copolymers (A) comprised in the composition (X1). The same applies to the case of using two or more kinds of the polymers (B), and the same also applies to the components in the composition (X2) below.

[Propylene polymer (B)]

The polymer (B) is not particularly limited as long as it satisfies the following requirements (1) and (2).

(1) A melting point (Tm) measured by a differential scanning calorimeter (DSC) is 110 to 170°C.
(2) An isotactic pentad fraction (mmmm fraction) is 90% or more.

The polymer (B) can be homopolypropylene or a copolymer of propylene and, for example, a C2-20 $\alpha$-olefin other than propylene. Such a copolymer can be a random copolymer or a block copolymer.

The polymer (B) is preferably homopolypropylene or a random copolymer of propylene and a C2-20 $\alpha$-olefin other than propylene.

The polymer (B) can be an unmodified polymer or a modified polymer. Examples of the modified polymer include the same polymers as the modified products of a polyolefin below.

Homopolypropylene is preferable considering the aspect of, for example, easy obtention of a molded article with excellent heat resistance, and the random copolymer is preferable considering the aspect of, for example, easy obtention of a molded article with excellent impact properties and transparency.

The random copolymer is preferably a copolymer of propylene and a C2-10 $\alpha$-olefin other than propylene, or a copolymer of propylene, ethylene, and a C4-10 $\alpha$-olefin.

With respect to 100 mol% in total of the propylene-derived constituent unit and the C2-20 $\alpha$-olefin-derived constituent unit other than the propylene-derived constituent unit, the content of the propylene-derived constituent unit in the random copolymer is typically 90 mol% or more, and the content of the C2-20 $\alpha$-olefin-derived constituent unit other than the propylene-derived constituent unit is typically 10 mol% or less, preferably 8 mol% or less, and more preferably 7.5 mol% or less, and is preferably 0.1 mol% or more, and more preferably 0.2 mol% or more.

Examples of the C2-20 $\alpha$-olefin other than propylene include ethylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosen.

Two or more kinds of the C2-20 $\alpha$-olefin other than propylene can be used.

The Tm of the polymer (B) measured by DSC is 110°C or more, preferably 120°C or more, and more preferably 125°C or more, and is 170°C or less, and preferably 168°C or less.

When a Tm is in the range, the moldability, heat resistance, and transparency are well balanced and the features as crystalline polypropylene are good, hence preferable.

The Tm is the melting point (peak top temperature of melting peak) observed using a DSC meter when the temperature is retained at 200°C for 10 minutes, then cooled to -20°C at a temperature decrease rate of 10°C/minute, retained at -20°C for 1 minute, and then increased again to 200°C at a temperature increase rate of 10°C/minute.

Note that the heat of fusion ($\Delta$H), an integrated value of the melting peaks, is preferably 50 mJ/mg or more.

The mmmm fraction of the polymer (B) is 90% or more, preferably 92% or more, and more preferably 95% or more.

When an mmmm fraction is in the range, a molded article with well balanced rigidity and transparency, particularly with excellent transparency, can be easily obtained.

The mmmm fraction, as described in, for example, JP-A-2007-186664, is an existence ratio of isotactic chains in pentad-unit in the molecular chains measured using $^{13}$C-NMR, in other words, a fraction of the propylene monomer unit present at the center of the chain in which 5 consecutive propylene monomer units are meso-bonded and can be measured by the method described in the same literature.

The MFR (measured at 230°C with a load of 2.16 kg) of the polymer (B) is typically 0.01 g/10 minutes or more, preferably 0.1 g/10 minutes or more, and more preferably 0.5 g/10 minutes or more, and is typically 400 g/10 minutes or less, preferably 200 g/10 minutes or less, and more preferably 100 g/10 minutes or less.

When an MFR is in the range, a composition with more excellent moldability can be easily obtained.

The polymer (B) can be produced by various known methods using a Ziegler-Natta catalyst or a metallocene catalyst.

<Polypropylene composition (X2)>

The polypropylene composition (X2) (hereinafter also simply referred to as the "composition (X2)") comprises the copolymer (A) and the copolymer (C).

Such a composition (X2) accordingly has excellent whitening resistance when stretched, easily provides a molded article with excellent whitening resistance when stretched even after treated at a high temperature, and is capable of easily forming a layer with an excellent adhesive strength to other resin layers.

The copolymer (A) comprised in the composition (X2) can be one kind, or two or more kinds, and the copolymer (C) comprised in the composition (X2) can also be one kind, or two or more kinds.

Note that the composition (X2) can comprise the polymer (B), and in this instance, can also be prepared using the composition (X1) and the copolymer (C).

The content of the copolymer (A) in the composition (X2) is preferably 1 wt% or more, and more preferably 5 wt% or more, and is preferably 50 wt% or less, and more preferably 40 wt% or less.

The total content of the copolymer (A) and the polymer (B) in the composition (X2) is preferably 50 to 95 wt%, and more preferably 65 to 95 wt%.

The content of the copolymer (C) with respect to 100 parts by weight of either the copolymer (A), or the copolymer (A) and the polymer (B) in total, in the composition (X2) is preferably 5 to 100 parts by weight, more preferably 5 to 70 parts by weight, further preferably 5 to 50 parts by weight, and particularly preferably 5 to 30 parts by weight.

When a content of the copolymer (A), the copolymer (A) and the polymer (B) in total, or the copolymer (C) is in the range, a molded article with more excellent transparency, impact strength, mechanical properties (for example, flexibility or rigidity), and impact resistance, particularly with more excellent balance in the rigidity and low temperature impact resistance, and transparency can be easily obtained.

[Ethylene-$\alpha$-olefin copolymer (C)]

The copolymer (C) is not particularly limited as long as it is a copolymer in which contents of the constituent units are in the above described ranges and is a copolymer other than the polymer (B), and is preferably an ethylene-$\alpha$-olefin random copolymer.

Use of the copolymer (C) enables easy obtention of a molded article particularly with well balanced impact resistance and transparency.

The content of the ethylene-derived constituent unit in the copolymer (C) is 50 to 99 mol%, preferably 55 to 99 mol%, more preferably 70 to 99 mol%, and particularly preferably 80 to 99 mol%.

The content of the C3-20 $\alpha$-olefin-derived constituent unit in the copolymer (C) is 1 to 50 mol%, preferably 1 to 45 mol%, more preferably 1 to 30 mol%, and particularly preferably 1 to 20 mol%.

These contents are the amounts with respect to 100 mol% in total of the ethylene- and C3-20 $\alpha$-olefin-derived constituent units.

When the contents of the constituent units are in the ranges, a molded article with well balanced impact resistance and flexibility can be easily obtained.

Examples of the C3-20 $\alpha$-olefin include propylene, 1-butene, 1-pentene, 3-methyl-1-butene, 1-hexene, 4-methyl-1-pentene, 1-heptene, 1-octene, 1-nonene, 1-decene, 1-undecene, 1-dodecene, 1-tetradecene, 1-hexadecene, 1-octadecene, 1-nonadecene, and 1-eicosen. Of these, a C3-10 $\alpha$-olefin is preferable, a C4-8 $\alpha$-olefin is more preferable, and propylene, 1-butene, 4-methyl-1-pentene, 1-hexene, and 1-octene being particularly preferable.

One kind, or two or more kinds of the C3-20 $\alpha$-olefin can be used.

The copolymer (C) can contain one kind, or two or more kinds, of constituent units derived from other polymerizable monomers in addition to the above described constituent units within a range of not affecting the objects of the present invention.

Examples of such other polymerizable monomers include vinyl compounds such as styrene, vinylcyclopentene, vinylcyclohexane, and vinylnorbornane; vinyl esters such as vinyl acetate; unsaturated organic acids and derivatives thereof such as maleic anhydride; and non-conjugated polyenes such as dicyclopentadiene, cyclohexadiene, and 5-ethylidene-2-norbornene.

Specific examples of the copolymer (C) include an ethylene-propylene copolymer, an ethylene-1-butene copolymer, an ethylene-propylene-1-butene copolymer, an ethylene-propylene-ethylidenenorbornene copolymer, an ethylene-1-butene-1-octene copolymer, an ethylene-4-methyl-1-pentene copolymer, an ethylene-1-hexene copolymer, and an ethylene-1-octene copolymer. Of these, for example, an ethylene-propylene copolymer, an ethylene-1-butene copolymer, an ethylene-1-hexene copolymer, and an ethylene-1-octene copolymer are preferable.

The density of the copolymer (C) is preferably 880 kg/m$^3$ or more, more preferably 885 kg/m$^3$ or more, and particularly preferably 890 kg/m$^3$ or more, and is preferably 920 kg/m$^3$ or less, and more preferably 905 kg/m$^3$ or less.

When a density is in the range, a molded article with well balanced impact resistance, rigidity, and transparency can be easily obtained.

The density can be measured by the density gradient tube method.

The MFR of the copolymer (C) (measured in conformity with ASTM D1238 at 190°C with a load of 2.16 kg) is preferably 0.1 g/10 minutes or more, more preferably 0.5 g/10 minutes or more, and particularly preferably 1.0 g/10 minutes or more, and is preferably 100 g/10 minutes or less, more preferably 50 g/10 minutes or less, and particularly preferably 10 g/10 minutes or less.

When an MFR is in the range, a molded article with well balanced impact resistance, rigidity, and transparency can be easily obtained.

The copolymer (C) has a ratio of $MFR_{10}$ measured in conformity with ASTM D1238 under the conditions of 190°C and a load of 10 kg to $MFR_2$ measured under the conditions of 190°C and a load of 2.16 kg ($MFR_{10}/MFR_2$) of preferably 5.0 or more, and more preferably 6.0 or more, and is preferably 8.0 or less, and more preferably 7.0 or less.

When an $MFR_{10}/MFR_2$ is in the range, a molded article with well balanced transparency and impact resistance can be easily obtained.

The copolymer (C) can be produced by a conventionally known method using, for example, a vanadium catalyst, a titanium catalyst, or a metallocene catalyst. Preferably, the production using a metallocene catalyst enables to obtain the copolymer having a narrow molecular weight distribution and composition distribution, thus more preferable in the aspects of the transparency and impact resistance.

<Adhesive resin composition>

The adhesive resin composition according to an embodiment of the present invention contains the copolymer (A) or the present composition.

When the adhesive resin composition contains the present composition, the composition (X2) is particularly preferable as the present composition.

The content of the copolymer (A) in the adhesive resin composition is preferably 1 to 50 wt%, and more preferably 1 to 40 wt%.

The adhesive resin composition preferably contains a modified product of a polyolefin in the aspects of, for example, having more excellent adhesiveness to and compatibility with base materials (other resins) and also having a potential of improving the wettability of the molded article surface to be obtained.

Specific examples of the modified product of a polyolefin include a graft-modified product of the copolymer (A), polymer (B), or copolymer (C) with one kind, or two or more kinds of polar monomers.

Preferable examples of the polar monomer include an unsaturated carboxylic acid and/or a derivative thereof. Examples of the unsaturated carboxylic acid and/or a derivative thereof include an unsaturated compound having one or more carboxylic acid groups, an ester of an unsaturated carboxylic acid compound having a carboxylic acid group and alkyl alcohol, and an unsaturated compound having one or more carboxylic acid anhydride groups (example: an acid anhydride of unsaturated dicarboxylic acid).

Examples of the unsaturated moiety in these compounds include a vinyl group, a vinylene group, and an unsaturated cyclic hydrocarbon group.

The polar monomer is preferably an unsaturated dicarboxylic acid or an acid anhydride thereof, and maleic acid, nadic acid, or an acid anhydride thereof being more preferable.

The modification amount (amount of the polar monomers grafted) in the modified product of a polyolefin is, in the aspects of having more excellent adhesiveness to and compatibility with base materials (other resins), typically 0.1 wt% or more, and preferably 0.2 wt% or more, and is typically 50 wt% or less, preferably 30 wt% or less, and more preferably 10 wt% or less, with respect to 100 wt% of the modified product.

The control of the modification amount is carried out by, for example, suitably selecting the grafting conditions.

The method for grafting the polar monomers is not particularly limited and a conventionally known graft polymerization method such as the solution method and the melt kneading method can be employed. Specifically, an example is a method in which the copolymer (A), polymer (B), or copolymer (C) is melted, or dissolved in a solvent to be a solution, and graft monomers are added thereto to cause a grafting reaction.

The content of the modified product of a polyolefin at the time of adding the modified product of a polyolefin to the adhesive resin composition is, with respect to 100 wt% of the adhesive resin composition, preferably 40 to 90 wt%, and more preferably 40 to 80 wt%.

When a content of the modified product of a polyolefin is in the range, the composition demonstrating a high adhesion strength can be easily obtained.

The adhesive resin composition is typically used as a multilayer film by being stacked on one or both surfaces of a single layer or multilayer base materials. Specifically, it is stacked to be used as a multilayer film using a method of, for example, co-extruding the adhesive resin composition and a base material layer by a known multilayer film forming method such as the T-die film forming method and the inflation film forming method, or a method of providing the adhesive resin composition on a base material molded in advance.

The base material is not particularly limited, but preferably includes a base material made of a thermoplastic resin.

Examples of the thermoplastic resin include a polypropylene resin (examples: homopolypropylene, and a copolymer of propylene and a small amount of an $\alpha$-olefin), a polyethylene resin (examples: a low-density polyethylene, a medium-density polyethylene, a high-density polyethylene, and a linear low-density polyethylene), a known ethylene polymer (examples: an ethylene-$\alpha$-olefin copolymer, an ethylene-ethyl acrylate copolymer, an ethylene-vinyl acetate copolymer, an ethylene-methyl methacrylate copolymer, an ethylene-n-butyl acrylate copolymer, and an ethylene-vinyl alcohol copolymer), poly-4-methyl-pentene-1, and mixtures thereof.

Note that the base material can be surface treated by a conventionally known method, or colored or printed.

The multilayer film can be preferably used as, for example, a surface protection film for protecting members for processing such as metal plates such as an aluminum plate, a steel plate, and a stainless-steel plate, painted plates thereof, a glass plate, and a synthetic resin plate, further home appliances, automobile components, and electronic components using these members, and specifically, can be preferably used as an optical plate protection film, a lens protection film, a semiconductor wafer back grinding tape, a dicing tape, a film used in the electronics field such as a printed circuit board protection tape, a window glass protection film, or a film for a baking finish.

[Additives]

In the present composition, additives other than the polymers (A) to (C) can be added as needed within a range of not affecting the objects of the present invention, specifically, such as a modified product of a polyolefin other than the polymers (A) to (C), a weather resistant stabilizer, a heat resistant stabilizer, an antistatic agent, an anti-slip agent, an anti-blocking agent, an antifog agent, a nucleating agent (crystal nucleating agent), a lubricant, a pigment, a dye, a plasticizer, an anti-aging agent, a hydrochloric acid absorbent, and an antioxidant.

These additives can be used singly, or two or more kinds thereof can be used.

For example, a crystal nucleating agent is preferably used in the aspects of, for example, increasing a crystallization rate to shorten a molding cycle, increasing the transparency, and adjusting the rigidity.

The crystal nucleating agent is preferably a substance having a nucleation effect on a propylene resin, and specific examples include a metal aromatic carboxylate, an metal aromatic phosphate, an alditol derivative, and a metal salt of rosin.

For the metal aromatic carboxylate, p-t-butyl benzoic acid aluminum is preferable. For the metal aromatic phosphate, sodium 2,2'-methylenebis(4,6-di-t-butylphenyl)phosphate and aluminum 2,2'-methylenebis(4,6-dit-butylphenyl)phosphate are preferable. For the alditol derivative, a hexitol derivative and a nonitol derivative are preferable, of which p-methyl-benzylidene sorbitol, p-ethyl-benzylidene sorbitol, and 7,8,9-trideoxy-3,5:4,6-bis-O-[(4-propylphenyl)methylene]-D-glycero-L-gulo-nonitol are preferably used.

When a crystal nucleating agent is used, the content of the crystal nucleating agent in the present composition is typically 0.01 wt% or more, and preferably 0.05 wt% or more, and is typically 2 wt% or less, and preferably 1 wt% or less.

<Preparation method of the present composition>

The present composition can be prepared by various known methods such as a method of mixing each of the components to be added in, for example, a Henschel mixer, a V-blender, a ribbon blender, a tumbler blender, or a kneader ruder, or melt kneading in, for example, a single screw extruder, a twin screw extruder, a kneader, or a Banbury mixer. Further, for example, granulation or pulverization can be carried out as needed.

When the mixing and kneading are carried out, each of the components to be added can be added all at once or added stepwise.

«Pellet»

The pellet according to an embodiment of the present invention comprises the copolymer (A) or the present composition.

For example, the shape and size of the pellet are not particularly limited and can be suitably selected in accordance with a desired use.

The pellet can be produced by melting the copolymer (A) in a kneader such as a Banbury mixer, a roll, or an extruder and granulating, or can be produced by melt kneading each component to be added to the present composition and then granulating.

«Molded article»

The molded article according to an embodiment of the present invention comprises the copolymer (A) or the present composition.

The molded article can be produced by molding the copolymer (A) or the present composition by a conventionally known molding method such as the blow molding method, the injection molding method, the press molding method, the extrusion molding method, the inflation molding method, the extrusion blow molding method, the injection blow molding method, the vacuum molding method, the calender molding method, or the melting T-die casting method.

The molded article is not particularly limited, but the copolymer (A) and the present composition provide the above described effects, and thus a molded article exerting such effects is preferable.

Specific examples of the molded article include a non-oriented film, a sheet, an injection molded article, a blow molded article, an automobile interior component, and an automobile exterior component. More specifically, examples include a multilayer hose, a tube, construction and building components such as a decorative sheet, and a flooring mat, a coating material (examples: an insulating layer and a sheath layer) for electric wires and cables, an unwoven fabric, an elastic film, a food packaging film, a packaging sheet, a food packaging tray and a drinking cup made of a thermoformed sheet, and a plastic container made of a bent sheet.

<Non-oriented film>

The non-oriented film is not particularly limited as long as it is not a stretched film, and for example the shape and size (thickness) can be suitably selected in accordance with a desired use. Further, the non-oriented film can be a single layer or a multilayer. In the case of a multilayer, at least one of the layers needs to be a film comprising the copolymer (A) or the present composition. Note that the non-oriented film, when multilayered, refers to all of the layers being not stretched.

The thickness of the non-oriented film (the total thickness in the case of a multilayer) is preferably 5 $\mu$m or more, and more preferably 10 $\mu$m or more, and is preferably 150 $\mu$m or less, and more preferably 100 $\mu$m or less.

Note that, in the present description, the film and the sheet are not particularly distinguished, but typically the film refers to a membranous form having a thickness of less than 250 $\mu$m, and the sheet refers to a thin plate form having a thickness of 250 $\mu$m or more.

Examples of specific use of the non-oriented film include a packaging film for packaging food, liquid, or a medical supply.

<Sheet>

The sheet is not particularly limited, and for example the shape and size (thickness) can be suitably selected in accordance with a desired use. Further, the sheet can be a single layer or a multilayer. In the case of a multilayer, at least one of the layers needs to be a sheet comprising the copolymer (A) or the present composition.

The thickness of the sheet (the total thickness in the case of a multilayer) is preferably 250 to 2000 $\mu$m, and more preferably 250 to 1500 $\mu$m.

Examples of specific use of the sheet include a packaging sheet for packaging food, liquid, or a medical supply, and a container made of such a sheet (examples: a tray and a cup made of a thermoformed sheet, and a container made of a bent sheet).

<Injection molded article and blow molded article>

The injection molded article is not particularly limited and examples include a molded article produced by being injection molded to a desired shape under known conditions using a conventionally known injection molding machine.

The injection molded article can have a wide variety of uses such as an automobile interior trim material, an automobile exterior component, a housing for a home appliance, and a container.

The blow molded article is not particularly limited, and examples include a molded article produced by being blow molded to a desired shape under known conditions using a conventionally known blow molding machine.

The blow molded article can be a multilayered molded article, and in such an instance, at least one layer comprises the copolymer (A) or the present composition.

Examples of specific use of the injection molded article and the blow molded article include a food container, a drinking container, a cap, a medical supply container, other various containers, a daily use item (examples: a clothes storage bin, a bucket, a washbasin, stationery such as a writing material, a container, a toy, a cooking utensil, and other various cases), a housing for a home appliance, and an automobile component.

<Automobile interior component and automobile exterior component>

The automobile interior component and automobile exterior component are not particularly limited, and examples include an automobile component molded by injection molding.

Specific examples of the automobile interior component include a trim, an instrument panel, and a column cover. Specific examples of the automobile exterior component include a fender, a bumper, a side molding, a mudguard, and a mirror cover.

Examples

Hereinafter, the present invention will be described in reference to Examples but the present invention is not limited to these Examples.

<Raw material>

• Propylene-ethylene-$\alpha$-olefin copolymer (A):

The propylene-ethylene-$\alpha$-olefin copolymers (A-1) to (A-5) obtained by Production Example to be described later were used.

• Propylene-ethylene copolymer (PER):

The propylene-ethylene copolymers (PER-1) to (PER-3) obtained by Production Example to be described later were used.

• Propylene polymer (B):

(B-1); Homopolypropylene (manufactured by Prime Polymer Co., Ltd., Prime Polypro F107, MFR (230°C, a 2.16 kg load) = 7 g/10 minutes, melting point = 163°C, mmmm fraction = 96%)
(B-2); Random polypropylene (manufactured by Prime Polymer Co., Ltd., Prime Polypro F227, ethylene content = 3.0 mol%, MFR (230°C, a 2.16 kg load) = 7 g/10 minutes, melting point = 150°C, mmmm fraction = 96%)

(B-3); Homopolypropylene (manufactured by Prime Polymer Co., Ltd., Prime Polypro J106, MFR (230°C, a 2.16 kg load) = 15 g/10 minutes, melting point = 163°C, mmmm fraction = 97%)

(B-4); Modified homopolypropylene, MFR (230°C, a 2.16 kg load) = 10 g/10 minutes, melting point = 160°C, mmmm fraction = 95%, density = 0.90 g/cm$^3$, amount of maleic anhydride grafted = 0.5 wt%

(B-5); Random polypropylene (ethylene content = 3.0 mol%, MFR (230°C, a 2.16 kg load) = 20 g/10 minutes, melting point = 150°C, mmmm fraction = 96%, a sorbitol transparent nucleating agent added)

• Ethylene-a-olefin copolymer (C):

(C-1); Ethylene-propylene copolymer (propylene content = 19 mol%, MFR (190°C, a 2.16 kg load) = 1.8 g/10 minutes)

(C-2); Ethylene-1-butene copolymer (1-butene content = 12 mol%, MFR (190°C, a 2.16 kg load) = 3.6 g/10 minutes)

[Production Example of the propylene-ethylene-α-olefin copolymers (A)]

Using diphenylmethylene(3-tert-butyl-5-ethylcyclopentadienyl) (2,7-di-tert-butylfluorenyl)zirconium dichloride prepared by the method described in JP-A-2007-186664 as a polymerization catalyst and methyl aluminoxane (manufactured by Tosoh Finechem Corporation, 0.3 mmol in terms of aluminum) as a co-catalyst, ethylene, propylene, and 1-butene to be the raw materials were polymerized in a hexane solution using continuous polymerization equipment thereby to obtain six kinds of propylene-ethylene-α-olefin copolymers (A-1) to (A-5).

Property values of the obtained copolymers (A-1) to (A-5) were measured by the following methods. The results are shown in Table 1.

[Production Example of propylene-ethylene copolymers (PER)]

Propylene-ethylene copolymers (PER-1) to (PER-3) were obtained by the same method as in Production Example of the copolymers (A) with the exception that the raw materials were changed to ethylene and propylene.

Property values of the obtained copolymers (PER-1) to (PER-3) were measured by the following methods. The results are shown in Table 1.

a) Composition ratio, B value, and isotactic triad fraction (mm fraction)

Determinations were made by $^{13}$C-NMR spectrum analysis. Specifically, determinations were made by the method described in JP-A-2007-186664.

Note that, in the present description, the content of the propylene-derived constituent unit is also expressed as "C3 content" or "propylene content," the content of the ethylene-derived constituent unit is also expressed as "C2 content" or "ethylene content," and the content of the 1-butene-derived constituent unit is also expressed as "C4 content."

b) Weight average molecular weight (Mw) and molecular weight distribution (Mw/Mn)

Using gel permeation chromatograph, Alliance GPC-2000 systems, manufactured by Waters Corporation as a GPC apparatus, Mw and Mn were measured in terms of polystyrene under the following conditions to calculate an Mw/Mn.

Separation column: 2 columns of TSKgel GNH6-HT (manufactured by Tosoh Corporation), and 2 columns of TSKgel GNH6-HTL (manufactured by Tosoh Corporation) (both column sizes had a diameter of 7.5 mm, and a length of 300 mm)

Column temperature: 140°C

Mobile phase: o-dichlorobenzene (manufactured by FUJIFILM Wako Pure Chemical Corporation) containing 0.025 wt% of BHT (manufactured by Takeda Pharmaceutical Company Limited) as an antioxidant

Migration rate: 1.0 mL/minute

Sample concentration: 15 mg/10 mL

Amount of sample injected: 500 μL

Detector: differential refractometer

Standard polystyrene: when a molecular weight is Mw <1000 and Mw >4 × 10$^6$, a Tosoh Corporation product was used, and when a molecular weight is 1000 ≤ Mw ≤ 4 × 10$^6$, a Pressure Chemical Co. product was used.

c) MFR

An MFR was measured in conformity with ASTM D1238 at 230°C with a load of 2.16 kg.

d) Melting point, heat of fusion

Using a hydraulic heat press molding machine preset at 190°C, a 0.5 mm-thick sheet (test piece) was manufactured by heating the copolymer for 5 minutes, then molding under an applied pressure of 10 MPa for 2 minutes, and subsequently cooling under an applied pressure of 10 MPa at 20°C for 4 minutes.

About 10 mg of the test piece after the lapse of 72 hours at room temperature from the molding was cooled to -100°C at a rate of 10°C/minute under an atmosphere of nitrogen (20 mL/minute). Subsequently, the test piece was retained at -100°C for 5 minutes, and then the peak top temperature of the crystal melting peak when the temperature was increased to 200°C at 10°C/minute was defined as the melting point whereby a heat of fusion ($\Delta H$) was calculated from an integrated value of the peaks. Note that when two or more melting peaks were observed, the lowest temperature of the peak top temperature of these peaks was defined as the melting point.

e) Tensile elasticity

Using a hydraulic heat press molding machine preset at 190°C, a 2 mm-thick sheet (test piece) was manufactured by heating the copolymer for 5 minutes, then molding under an applied pressure of 10 MPa for 2 minutes, and subsequently cooling under an applied pressure of 10 MPa at 20°C for 4 minutes.

An ASTM type 4 dumbbell was manufactured from the obtained test piece in conformity with ASTM D638, and the dumbbell was measured for a tensile elasticity under the conditions of 23°C and a tension rate: 50 mm/min.

f) Shore A hardness (instantaneous value)

Using a hydraulic heat press molding machine preset at 190°C, a 2 mm-thick sheet (test piece) was manufactured by heating the copolymer for 5 minutes, then molding under an applied pressure of 10 MPa for 2 minutes, and subsequently cooling under an applied pressure of 10 MPa at 20°C for 4 minutes.

After the lapse of 72 hours at room temperature from the molding, the test piece after the lapse of 72 hours was in contact with an indenter using a type A meter, and the scale was immediately read (in conformity with ASTM D2240).

[Table 1]

| | | (A-1) | (A-2) | (A-3) | (A-4) | (A-5) | PER-1 | PER-2 | PER-3 |
|---|---|---|---|---|---|---|---|---|---|
| C3 Content | mol% | 81.5 | 84.1 | 71.1 | 78.4 | 66.1 | 87.3 | 78.6 | 80.3 |
| C2 Content | mol% | 12.2 | 10.4 | 6.1 | 8.9 | 12.3 | 12.7 | 21.4 | 19.7 |
| C4 Content | mol% | 6.3 | 5.5 | 22.8 | 12.7 | 21.6 | - | - | - |
| B Value | - | 1.0 | 1.0 | 0.9 | 1.0 | 1.0 | 1 | 1 | 1 |
| mm Fraction | % | 89 | 89 | 92 | 91 | 92 | 90 | 89 | 89 |
| Mw | - | 325000 | 338000 | 321000 | 334000 | 334000 | 200000 | 293000 | 160000 |
| Mw/Mn | - | 2.3 | 2.2 | 2.1 | 2.2 | 2.1 | 2.2 | 2.1 | 2 |
| MFR | g/10 minutes | 1.4 | 1.5 | 2.3 | 2.1 | 1.8 | 8 | 3 | 20 |
| Melting point | °C | 51.5 | 51.0 | 47.8 | 50.1 | ND | 80 | 44.4 | 48 |
| $\Delta H$ | J/g | 28.9 | 35.4 | 27.1 | 28.9 | ND | 32 | 7 | 8 |
| Tensile elasticity | MPa | 58 | 115 | 68 | 68 | 1 | 160 | 14 | 16 |
| Shore A hardness (instantaneous value) | - | 91 | 96 | 92 | 93 | 33 | 95 | 70 | 73 |

[Examples 1-1 and 1-2 and Comparative Examples 1-1 to 1-3]

The copolymers shown in Table 2, using a hydraulic heat press molding machine preset at 190°C, were heated for 5 minutes, then molded under an applied pressure of 10 MPa for 2 minutes, and subsequently cooled under an applied pressure of 10 MPa at 20°C for 4 minutes thereby to manufacture sheets having a thickness of 2 mm.
The obtained sheet was left to stand for 72 hours at room temperature to obtain a test piece, and the test piece was used to measure a dissolved amount in hexane, a tensile elasticity, and a shore A hardness (instantaneous value) by the following methods. The results are shown in Table 2.

<Dissolved amount in hexane >

The test piece was cut out in an amount of 2 g, put in a 300 mL beaker, and 200 mL of n-hexane was added thereto, and subsequently the beaker was covered with an aluminum foil and stirred for 30 minutes in a water bath preset at 30°C. The stirred liquid was transferred to a round-bottom flask, the solvent was removed using an evaporator until the amount of liquid remaining was about 30 mL, and the remaining liquid was transferred to a 50 mL beaker whose tare weight was weighed. Subsequently, the solvent was removed under a flow of nitrogen gas, followed by further drying for 2 hours in a vacuum dryer. A weight of the beaker taken out from the dryer was immediately weighed, and an amount of solid w g remained in the beaker was determined by the difference from the tare weight. An dissolved amount (wt%) in hexane was determined from $w \times 100/2$. Smaller values correspond to excellent elution resistance.
The dissolved amount in hexane is preferably 30 wt% or less, and more preferably 20 wt% or less.

<Tensile elasticity>

An ASTM type 4 dumbbell was manufactured from the obtained test piece in conformity with ASTM D638, and the dumbbell was measured for a tensile elasticity under the conditions of 23°C and a tension rate: 50 mm/min.

<Shore A hardness (instantaneous value)>

Using a type A meter, the test piece was in contact with an indenter, and the scale was immediately read (in conformity with ASTM D2240).

[Example 1-3]

Using LABO PLASTOMILL (manufactured by Toyo Seiki Seisaku-sho, Ltd.), the raw materials in the ratios (wt%) shown in Table 2 were kneaded for 5 minutes under the conditions of 190°C and 40 rpm thereby to obtain a polypropylene composition.
A test piece was manufactured in the same manner as in Example 1-1 with the exception that the obtained composition was used, and evaluated. The results are shown in Table 2.

[Table 2]

| | | | | Example | | | Comparative Example | | |
|---|---|---|---|---|---|---|---|---|---|
| | | | | 1-1 | 1-2 | 1-3 | 1-1 | 1-2 | 1-3 |
| Raw material | (A-1) | | wt% | 100 | - | - | - | - | - |
| | (A-2) | | wt% | - | 100 | - | - | - | - |
| | (A-5) | | wt% | - | - | 85 | - | - | - |
| | PER-1 | | wt% | - | - | - | 100 | - | - |
| | PER-2 | | wt% | - | - | - | - | 100 | - |
| | PER-3 | | wt% | - | - | - | - | - | 100 |
| | (B-1) | | wt% | - | - | 15 | - | - | - |
| Evaluation | Dissolved amount in hexane | | wt% | 5.9 | 5.5 | 2.2 | 48 | 40 | 60 |
| | Tensile elasticity | | MPa | 58 | 115 | 14 | 160 | 14 | 16 |
| | Shore A hardness (instantaneous value) | | - | 91 | 96 | 74 | 95 | 70 | 73 |

[Examples 2-1 to 2-5 and Comparative Examples 2-1 and 2-2]

The raw materials shown in Table 3 were kneaded in the ratios (wt%) of Table 3 using an extruder ($\varphi$40 mm), and the obtained pellets were extruded at 230°C using a cast film extruder, during which a single layer non-oriented film having a thickness of 100 $\mu$m was manufactured. The following evaluations were carried out on the obtained single layer non-oriented films. The results are shown in Table 3.

<Heat seal (HS) strength (before heat treatment)>

A Teflon (registered trademark) sheet having a thickness of 50 $\mu$m, two sheets of the obtained single layer non-oriented films, and a Teflon (registered trademark) sheet having a thickness of 50 $\mu$m were overlaid in this sequence thereby to manufacture a specimen.

A heat seal tester (manufactured by TESTER SANGYO CO. LTD., Type TB-701B) was set in such a way that heat seal bars had a width of 15 mm $\times$ a length of 300 mm, a temperature of the lower side seal bar was 70°C and a temperature of the upper side seal bar was 170°C, and the specimen was interposed between the seal bars to carry out heat sealing at a pressure of 0.2 MPa for 1.0 second. Then, the two Teflon sheets were detached to obtain a laminated film, and the laminated film was allowed to stand at 23°C for 1 day. A 15 mm-wide slit was made on the laminated film in such a way as to include the heat-sealed part, and the part which was not heat sealed was chucked in a tensile tester (manufactured by INTESCO Co., Ltd., IM-20ST). A maximum load, when the heat-sealed part was peeled in a 180° direction at a rate of 300 mm/minute, was measured. This measurement was carried out 5 times, and the average value of the maximum loads was defined as the heat seal strength.

<Heat seal (HS) strength (after heat treatment)>

The heat seal strength after heat treatment was measured in the same manner as in the HS strength (before heat treatment) test with the exception that two films obtained by heat treating the single layer non-oriented films obtained above at 85°C for 5 days were used in place of the two single layer non-oriented films in the HS strength (before heat treatment) test.

<Heat seal (HS) strength retention rate>

An HS strength retention rate was determined from the HS strengths before and after heat treatments by the following formula. Larger values correspond to excellent heat resistance. Further, an HS strength retainability was evaluated based on the HS strength retention rate on the following criteria.

$$\text{HS strength retention rate (\%) = 100} \times \text{HS strength (after heat treatment)/HS strength (before heat treatment)}$$

• Evaluation criteria for HS strength retainability

AA: HS strength retention rate was 80% or more.
BB: HS strength retention rate was 30% or more and less than 80%.
CC: HS strength retention rate was less than 30%.

<Appearance change>

Evaluation was made on the presence or absence of appearance change on the surfaces of films before and after heating the single layer non-oriented film at 85°C for 5 days.

AA: No appearance change.
BB: Components bled out on part of the surface (part of the surface was sticky).
CC: Components bled out throughout the entire surface (the entire surface was sticky).

<Thickness retention rate>

A laminated film was obtained in the same manner as in the HS strength (before heat treatment) test with the exception that the heat seal time was 1.0 second or 3.0 seconds in the HS strength (before heat treatment) test.

For the respective cases with heat seal times of 1.0 second and 3.0 seconds, the total thickness of two single layer non-oriented films before heat seal and the thickness of the heat-sealed part after heat seal were measured using an optical microscope, and thickness retention rates before and after heat seal (thickness retention rate (1s) and thickness retention rate (3s), respectively) were determined by the following formula. Larger values mean that heat shrinkage is considered less likely to occur. Further, heat shrinkage resistance was evaluated based on the thickness retention rate on the following criteria.

Thickness retention rate (%) = 100 × thickness of heat-sealed part after heat seal/total thickness of two single layer non-oriented films before heat seal

• Evaluation criteria for heat shrinkage resistance

AA: Both thickness retention rates (1s) and (3s) were 70% or more.
CC: At least one of thickness retention rates (1s) and (3s) was less than 70%.

[Table 3]

| | | | Example | | | | | Comparative Example | |
|---|---|---|---|---|---|---|---|---|---|
| | | | 2-1 | 2-2 | 2-3 | 2-4 | 2-5 | 2-1 | 2-2 |
| Raw material | (A-1) | wt% | 20 | - | - | - | - | - | - |
| | (A-2) | wt% | - | 20 | - | - | - | - | - |
| | (A-3) | wt% | - | - | 20 | - | - | - | - |
| | (A-4) | wt% | - | - | - | 20 | - | - | - |
| | (A-5) | wt% | - | - | - | - | 20 | - | - |
| | PER-1 | wt% | - | - | - | - | - | 20 | - |
| | PER-2 | wt% | - | - | - | - | - | - | 20 |
| | (B-2) | wt% | 80 | 80 | 80 | 80 | 80 | 80 | 80 |
| Evaluation | HS Strength (before heat treatment) | N/15 mm | 35.9 | 35.1 | 40.4 | 48.2 | 44 | 45.9 | 41.3 |
| | HS Strength (after heat treatment) | N/15 mm | 40.5 | 41 | 34.3 | 41.5 | 17.1 | 40.4 | 31.6 |
| | HS Strength retention rate | % | 113 | 117 | 85 | 86 | 39 | 88 | 77 |
| | HS Strength retainability | | AA | AA | AA | AA | BB | AA | BB |
| | Appearance change | - | AA | AA | AA | AA | BB | AA | CC |
| | Thickness retention rate (1s) | % | 92 | 89 | - | - | 85 | 80 | 79 |
| | Thickness retention rate (3s) | % | 70 | 74 | - | - | 70 | 56 | 60 |
| | Heat shrinkage resistance | - | AA | AA | - | - | AA | CC | CC |

[Examples 3-1 to 3-5 and Comparative Examples 3-1 and 3-2]

The raw materials shown in Table 4 were kneaded in the ratios (wt%) of Table 4 thereby to obtain pellets (polypropylene compositions). Using the obtained composition as an intermediate layer, and using random polypropylene (manufactured by Prime Polymer Co., Ltd., Prime Polypro F227, ethylene content = 3.0 mol%, MFR (230°C, a 2.16 kg load) = 7 g/10 minutes, melting point = 150°C,) as a sealant layer, a multilayer non-oriented film (sealant layer/intermediate layer/sealant layer = 10 μm/30 μm/10 μm) was manufactured under the following conditions.

Using the obtained multilayer non-oriented films, the following performances were evaluated. The results are shown in Table 4.

- Extruder: For the sealant layer, an extruder with φ30 mm and an L/D = 26 was used, and for the intermediate layer, an extruder with φ40 mm and an L/D = 26 was used.
- Resin temperature: all 230°C
- Chill roll temperature: all 30°C
- Take-up speed: all 10 m/minute

<Heat seal (HS) strength>

The heat seal strength was measured in the same manner as in the HS strength (before heat treatment) test in Example 2-1 with the exception that two multilayer non-oriented films obtained were used in place of the two single layer non-oriented films in the HS strength (before heat treatment) test in Example 2-1, and further the HS strength retainability was evaluated.

<Appearance change>

Evaluation was made on the presence or absence of appearance change on the surfaces of films before and after heating the multilayer non-oriented films at 85°C for 5 days.

AA: No appearance change.
CC: Components bled out on the surface (the surface was sticky).

<Thickness retention rate>

For the respective cases with heat seal times of 1.0 second and 3.0 seconds, the total thickness of two multilayer non-oriented films before heat seal and the thickness of the heat-sealed part after heat seal were measured using an optical microscope in the same manner as in the test of the thickness retention rate in Example 2-1 with the exception that two multilayer non-oriented films obtained were used in place of the two single layer non-oriented films in the test of the thickness retention rate in Example 2-1, thickness retention rates before and after heat seal (thickness retention rate (1s) and thickness retention rate (3s), respectively) were determined by the following formula, and heat shrinkage resistance was evaluated on the following criteria.

$$\text{Thickness retention rate (\%)} = 100 \times \text{thickness of heat-sealed part after heat seal/total thickness of two multilayer non-oriented films before heat seal}$$

• Evaluation criteria for heat shrinkage resistance

AA: Both thickness retention rates (1s) and (3s) were 45% or more.
CC: At least one of thickness retention rates (1s) and (3s) was less than 45%.

[Table 4]

| | | | | Example | | | | | Comparative Example | |
|---|---|---|---|---|---|---|---|---|---|---|
| | | | | 3-1 | 3-2 | 3-3 | 3-4 | 3-5 | 3-1 | 3-2 |
| Raw material | | (A-1) | wt% | 20 | - | - | - | - | - | - |
| | | (A-2) | wt% | - | 20 | - | - | - | - | - |
| | | (A-5) | wt% | - | - | 20 | 40 | 60 | - | - |
| | | PER-1 | wt% | - | - | - | - | - | 20 | - |
| | | PER-2 | wt% | - | - | - | - | - | - | 20 |
| | | (B-2) | wt% | 80 | 80 | 80 | 80 | 60 | 80 | 80 |
| Evaluation | | HS Strength | N/15 mm | 14.6 | 16.2 | 11.9 | 41.2 | 46.6 | 12.3 | 44.2 |
| | | HS Strength retainability | - | - | - | - | AA | AA | - | AA |
| | | Appearance change | - | AA | AA | AA | AA | AA | AA | AA |
| | | Thickness retention rate (1s) | % | 88 | 89 | 89 | - | - | 85 | 70 |
| | | Thickness retention rate (3s) | % | 49 | 46 | 48 | - | - | 31 | 37 |
| | | Heat shrinkage resistance | - | AA | AA | AA | - | - | CC | CC |

[Examples 4-1 to 4-9 and Comparative Examples 4-1 and 4-2]

Using LABO PLASTOMILL (manufactured by Toyo Seiki Seisaku-sho, Ltd.), the raw materials in the ratios (parts by weight) shown in Table 5 were kneaded for 5 minutes under the conditions of 190°C and 40 rpm thereby to obtain polypropylene compositions.

Using a hydraulic heat press molding machine preset at 190°C, a 500 $\mu$m-thick sheet was manufactured by heating the composition for 5 minutes, then molding under an applied pressure of 10 MPa for 2 minutes, and subsequently cooling under an applied pressure of 10 MPa at 20°C for 4 minutes.

<Whitening resistance test>

A type 2 dumbbell specified in JIS K 6251 was manufactured from the obtained sheet, a hue (L value) when the dumbbell was elongated 15 mm at a tensile rate of 50 mm/min was measured using a spectrophotometer (manufactured by Konica Minolta, Inc., CM-3700d), and hue change ($\Delta$L) was calculated based on the following formula. Further, using sheets obtained by heating the obtained sheets at 85°C for 5 days, hue change ($\Delta$L) was calculated in the same manner. Smaller $\Delta$L values mean that the demonstration of good whitening resistance is presented. The results are shown in Table 5.

$$\Delta L = L \text{ Value (after elongation)} - L \text{ value (before elongation)}$$

[Table 5]

| | | | | Example | | | | | | | | | Comparative Example | |
| --- | --- | --- | --- | --- | --- | --- | --- | --- | --- | --- | --- | --- | --- | --- |
| | | | | 4-1 | 4-2 | 4-3 | 4-4 | 4-5 | 4-6 | 4-7 | 4-8 | 4-9 | 4-1 | 4-2 |
| Raw material | | (A-1) | Parts by weight | 24 | 35 | - | - | - | - | - | - | - | - | - |
| | | (A-2) | Parts by weight | - | - | 24 | - | - | - | - | - | - | - | - |
| | | (A-3) | Parts by weight | - | - | - | 24 | 35 | - | - | - | - | - | - |
| | | (A-4) | Parts by weight | - | - | - | - | - | 24 | 35 | - | - | - | - |
| | | (A-5) | Parts by weight | - | - | - | - | - | - | - | 24 | 35 | - | - |
| | | PER-1 | Parts by weight | - | - | - | - | - | - | - | - | - | 24 | 35 |
| | | (B-2) | Parts by weight | 76 | 65 | 76 | 76 | 65 | 76 | 65 | 76 | 65 | 76 | 65 |
| | | (C-1) | Parts by weight | 18 | 18 | 18 | 18 | 18 | 18 | 18 | 18 | 18 | 18 | 18 |
| Evaluation | | $\Delta$L (Before heat treatment) | - | 17.95 | 11.61 | 26.33 | 12.98 | 9.23 | 19.25 | 8.69 | 12.54 | 8.91 | 17.16 | 10.4 |
| | | $\Delta$L (After heat treatment) | - | 23.62 | 5.54 | 30.46 | 17.6 | 1.57 | 24.36 | 4.33 | 8.9 | 2.7 | 39.9 | 11.1 |

EP 3 978 543 A1

[Examples 5-1 to 5-6 and Comparative Examples 5-1 and 5-2]

The raw materials in the ratios (wt%) shown in Table 6 were melt kneaded using a φ40 mm-single screw extruder under the conditions of a melting temperature of 210°C and a rotation speed of 40 to 50 rpm to manufacture pellets.

The pellets were injection molded under the conditions of a temperature of 230°C and a mold temperature of 40°C to manufacture test pieces in the dumbbell shape or sheet shape. Further, considering a food container having a thickness of 0.6 mm, the obtained pellets were press molded at a temperature of 200°C to obtain a test piece in the sheet shape.

The following evaluations were carried out using the obtained test pieces. The results are shown in Table 6.

<Tensile elasticity>

Using the test pieces in the dumbbell shape (an ASTM type 4 dumbbell) having a thickness of 3.2 mm obtained by the injection molding, a tensile elasticity was measured under the conditions of 23°C and a tensile rate of 50 mm/min in the conformity with ASTM D638.

<Elution amount in n-heptane>

Using the 0.6 mm-thick sheet obtained by press molding, an elution amount in n-heptane was measured under the conditions of 25°C and 60 minutes based on "Chapter III Apparatus and Containers and Packaging D, 2, (2) 4" in "Specification and Standards for Synthetic-Resin Apparatus, Containers, or Packaging" (March 31, 2006, revised Ministry of Health, Labor, and Welfare Notification No. 201).

When the polypropylene composition has a tensile elasticity of less than 100 MPa, an elution amount in n-heptane is preferably 500 μg/ml or less, and more preferably 400 μg/ml or less.

When the polypropylene composition has a tensile elasticity of 100 to 400 MPa, an elution amount in n-heptane is preferably 300 μg/ml or less, and more preferably 200 μg/ml or less.

When the polypropylene composition has a tensile elasticity of more than 400 MPa, an elution amount in n-heptane is preferably 50 μg/ml or less, and more preferably 30 μg/ml or less.

<Gloss retention rate>

A 2 mm-thick sheet obtained by injection molding was heated at 80°C in an oven for 3 days. In conformity with JIS Z 8741, 60° glosses before and after heating (specular glossiness at an incident angle and an acceptance angle of 60°) were measured and a gloss retention rate was calculated by the following formula.

```
Gloss retention rate (%) = 60° gloss after heating ×

100/60° gloss before heating
```

[Table 6]

| | | | | Example | | | | | | Comparative Example | |
|---|---|---|---|---|---|---|---|---|---|---|---|
| | | | | 5-1 | 5-2 | 5-3 | 5-4 | 5-5 | 5-6 | 5-1 | 5-2 |
| Raw material | (A-1) | | wt% | 60 | 80 | - | - | - | - | - | - |
| | (A-2) | | wt% | - | - | 80 | - | - | - | - | - |
| | (A-4) | | wt% | - | - | - | 60 | 80 | - | - | - |
| | (A-5) | | wt% | - | - | - | - | - | 40 | - | - |
| | PER-2 | | wt% | - | - | - | - | - | - | 40 | 60 |
| | (B-3) | | wt% | 40 | 20 | 20 | 40 | 20 | 60 | 60 | 40 |

(continued)

| | | | Example | | | | | | Comparative Example | |
|---|---|---|---|---|---|---|---|---|---|---|
| | | | 5-1 | 5-2 | 5-3 | 5-4 | 5-5 | 5-6 | 5-1 | 5-2 |
| Evaluation | Tensile elasticity | MPa | 300 | 120 | 210 | 310 | 110 | 520 | 670 | 240 |
| | Elution amount in n-heptane | μg/ml | 38 | 56 | 34 | 48 | 100 | 24 | 51 | 310 |
| | Gloss retention rate | % | 95 | 80 | 95 | 75 | 95 | 95 | 80 | 30 |

[Example 6]

62 parts by weight of (B-4), 25 parts by weight of (C-1), and 38 parts by weight of (A-5) were mixed and melt kneaded at 230°C using a twin screw kneader (TEX-30, manufactured by The Japan Steel Works, Ltd.) to obtain a polypropylene composition. The obtained composition had an MFR of 4.7 g/10 minutes when measured in conformity with ASTM D1238 at 230°C with a load of 2.16 kg and a density of 0.88 g/cm$^3$ when measured in conformity with ASTM D1505.

Each layer consisting of the following constituents was co-extruded under the following conditions to form, in the feed block, a 3-layer film in which an inner layer, an intermediate layer, and an outer layer were stacked in this sequence.

- Outer layer: polypropylene (F327, manufactured by Prime Polymer Co., Ltd., MFR = 7 g/10 minutes) was extruded at 230°C using a screw having a diameter of 50 mm and an L/D = 28.
- Intermediate layer: the obtained polypropylene composition was extruded at 230°C using a screw having a diameter of 50 mm and an L/D = 28.
- Inner layer: Eval F101A (manufactured by KURARAY CO., LTD., MFR = 1.0 g/10 minutes), as an ethylene-vinyl alcohol copolymer, was extruded at 220°C using a screw having a diameter of 40 mm and an L/D = 28.

Note that a dies temperature when the 3-layer film was formed was 220°C. The 3-layer film co-extruded as a film having a thickness of about 240 μm was drawn at a rate of 5 m/minute while cooled by a chill roll. The thickness of each layer was outer layer/intermediate layer/inner layer = 160/40/40 μm.

<Interlayer adhesive strength>

The 3-layer film produced above was cut out to be 15 mm wide, and an adhesive strength (unit: N/15 mm) at the interface between the inner layer and the intermediate layer at room temperature of 23°C was measured using a tensile tester by the T-peel method. Note that the crosshead speed at this time was 300 mm/min. The result is shown in Table 7.

[Comparative Example 6]

A 3-layer film was produced, and an interlayer adhesive strength was measured in the same manner as in Example 6 with the exception that an intermediate layer forming composition was prepared according to the formulation shown in Table 7. The result is shown in Table 7.

[Table 7]

|  |  |  |  | Example | Comparative Example |
|---|---|---|---|---|---|
|  |  |  |  | 6 | 6 |
| Composition | | (B-4) | Parts by weight | 62 | 62 |
| | | (C-1) | Parts by weight | 25 | 25 |
| | | (A-5) | Parts by weight | 38 | - |
| | | PER-1 | Parts by weight | - | 38 |
| | | MFR | g/10 min | 4.7 | 6.6 |
| | | Density | g/cm³ | 0.88 | 0.89 |
| Evaluation | | Interlayer adhesive strength | N/15 mm | 17 | 10 |

[Examples 7-1 to 7-4 and Comparative Examples 7-1 to 7-4]

Test pieces in the dumbbell shape or sheet shape were manufactured by injection molding, and test pieces in the sheet shape were manufactured by press molding in the same manner as in Example 5-1 with the exception that the raw materials in the ratios (parts by weight) shown in Table 8 were used.
Using the obtained test pieces, tensile elasticities and elution amount in n-heptane were measured in the same manner as in Example 5-1. Further, the following various evaluations were made. The results are shown in Table 8.

<Haze (transparency)>

Using the 2 mm-thick sheet obtained by injection molding, a haze was measured using a digital turbidimeter "NDH-20D" manufactured by NIPPON DENSHOKU INDUSTRIES CO., LTD in conformity with JIS K 7136.

<Compression set>

A 6-ply stack of 2 mm-thick sheets obtained by press molding was 25% compressed at 70°C in a direction of lamination, retained for 24 hours, and then measured for a length in the lamination direction of the laminate 30 minutes after taken out of the compressor thereby to calculate a compression set in reference to JIS K 6262.
Smaller values mean that the deformation at a high temperature is unlikely to occur.

[Table 8]

|  |  |  | Example | | | | Comparative Example | | | |
|---|---|---|---|---|---|---|---|---|---|---|
|  |  |  | 7-1 | 7-2 | 7-3 | 7-4 | 7-1 | 7-2 | 7-3 | 7-4 |
| Raw material | (A-5) | Parts by weight | 60 | 80 | 33 | 67 | - | - | - | - |
| | PER-2 | Parts by weight | - | - | - | - | 60 | 80 | 67 | - |
| | PER-3 | Parts by weight | - | - | - | - | - | - | - | 60 |
| | (B-5) | Parts by weight | 40 | 20 | 67 | 33 | 40 | 20 | 33 | 40 |
| | (C-2) | Parts by weight | - | - | 67 | 37 | - | - | 67 | - |
| Evaluation | Tensile elasticity | MPa | 110 | 30 | 220 | 50 | 135 | 28 | 240 | 92 |
| | Haze | % | 17 | 18 | 14 | 22 | 17 | 8 | 24 | 16 |
| | Compression set | % | 74 | 64 | 87 | 86 | 97 | 87 | 93 | 88 |
| | Elution amount in n-heptane | μg/ml | 200 | 360 | 40 | 120 | 230 | 400 | - | 550 |

The molded articles obtained in Examples 7-1 to 7-4 had excellent balance in the flexibility, compression set, and elusion resistance.
The molded articles obtained in Comparative Examples 7-1 and 7-2 had poor balance in the flexibility, compression set, and elusion resistance, the molded article obtained in Comparative Example 7-3 had poor balance in the flexibility and compression set, and the molded article obtained in Comparative Example 7-4 had poor balance in the flexibility and elution resistance.

**Claims**

1. A propylene-ethylene-α-olefin copolymer (A) satisfying following requirements (I) to (V):

   (I) a content of a propylene-derived constituent unit (i) is 50 to 92 mol%, a content of an ethylene-derived constituent unit (ii) is 5 to 20 mol%, and a content of a C4-20 α-olefin-derived constituent unit (iii) is 3 to 30 mol%, provided that the constituent units (i) to (iii) in total is 100 mol%;
   (II) an isotactic triad fraction calculated by $^{13}$C-NMR is 85% or more;
   (III) a B value specified by $B = M_{OE}/(2M_O \times M_E)$ is 0.9 to 1.5 wherein $M_{OE}$ represents a mole fraction of chains of propylene and ethylene and chains of the C4-20 α-olefin and ethylene in total to a total dyad, $M_O$ represents mole fractions of propylene and the C4-20 α-olefin in total, and $M_E$ represents a mole fraction of ethylene;
   (IV) a melt flow rate is 1 to 3 g/10 minutes; and
   (V) a melting point measured by a differential scanning calorimeter is less than 100°C, or no melting peak is observed.

2. The propylene-ethylene-α-olefin copolymer (A) according to claim 1, satisfying following requirement (VI):
   (VI) no melting peak is observed by a differential scanning calorimeter, or a heat of fusion by a differential scanning calorimeter is 10 to 50 J/g.

3. The propylene-ethylene-α-olefin copolymer (A) according to claim 1 or 2, satisfying at least one of following requirements (VII) and (VIII):

   (VII) a content of the constituent unit (i) is 61 to 85 mol%, a content of the constituent unit (ii) is 6 to 14 mol%, and a content of the constituent unit (iii) is 5 to 24 mol%, provided that the constituent units (i) to (iii) in total is 100 mol%; and
   (VIII) no melting peak is observed by a differential scanning calorimeter, or a heat of fusion by a differential scanning calorimeter is 20 to 40 J/g.

4. A polypropylene composition comprising the propylene-ethylene-α-olefin copolymer (A) according to any one of claims 1 to 3.

5. The polypropylene composition according to claim 4 comprising a propylene polymer (B) satisfying following requirements (1) and (2):

   (1) a melting point measured by a differential scanning calorimeter is 110 to 170°C; and
   (2) an isotactic pentad fraction is 90% or more.

6. The polypropylene composition according to claim 4 or 5, comprising an ethylene-α-olefin copolymer (C) satisfying following requirement (C1):
   (C1) the ethylene-α-olefin copolymer (C) comprises an ethylene-derived constituent unit in an amount of 50 to 99 mol% and a C3-20 α-olefin-derived constituent unit in an amount of 1 to 50 mol%, provided that the ethylene- and α-olefin-derived constituent units in total is 100 mol%.

7. An adhesive resin composition comprising the propylene-ethylene-α-olefin copolymer (A) according to any one of claims 1 to 3, or the polypropylene composition according to any one of claims 4 to 6.

8. A pellet comprising the propylene-ethylene-α-olefin copolymer (A) according to any one of claims 1 to 3, or the polypropylene composition according to any one of claims 4 to 6.

9. A molded article comprising the propyleneethylene-α-olefin copolymer (A) according to any one of claims 1 to 3, or the polypropylene composition according to any one of claims 4 to 6.

10. A non-oriented film comprising the propyleneethylene-α-olefin copolymer (A) according to any one of claims 1 to 3, or the polypropylene composition according to any one of claims 4 to 6.

11. A sheet comprising the propylene-ethylene-$\alpha$-olefin copolymer (A) according to any one of claims 1 to 3, or the polypropylene composition according to any one of claims 4 to 6.

12. An injection molded article comprising the propylene-ethylene-$\alpha$-olefin copolymer (A) according to any one of claims 1 to 3, or the polypropylene composition according to any one of claims 4 to 6.

13. A blow molded article comprising the propyleneethylene-$\alpha$-olefin copolymer (A) according to any one of claims 1 to 3, or the polypropylene composition according to any one of claims 4 to 6.

14. An automobile component selected from interior components and exterior components, comprising the propyleneethylene-$\alpha$-olefin copolymer (A) according to any one of claims 1 to 3, or the polypropylene composition according to any one of claims 4 to 6.

<div align="center">

**INTERNATIONAL SEARCH REPORT**

</div>

| | International application No. |
|---|---|
| | PCT/JP2020/021087 |

**A. CLASSIFICATION OF SUBJECT MATTER**
Int.Cl. C08F210/06(2006.01)i, C08L23/08(2006.01)i, C08L23/12(2006.01)i, C08L23/14(2006.01)i
FI: C08F210/06, C08L23/08, C08L23/14, C08L23/12
According to International Patent Classification (IPC) or to both national classification and IPC

**B. FIELDS SEARCHED**

Minimum documentation searched (classification system followed by classification symbols)
Int.Cl. C08F210/06, C08L23/08, C08L23/12, C08L23/14

Documentation searched other than minimum documentation to the extent that such documents are included in the fields searched
Published examined utility model applications of Japan 1922–1996
Published unexamined utility model applications of Japan 1971–2020
Registered utility model specifications of Japan 1996–2020
Published registered utility model applications of Japan 1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2006/098452 A1 (MITSUI CHEMICALS, INC.) 21.09.2006 (2006-09-21), claims, paragraphs [0064], [0119], [0143]–[0149] | 1–14 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 15.07.2020 | 28.07.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2020/021087

```
WO 2006/098452 A1  21.09.2006    US 2008/0085977 A1
                                 claims, paragraphs [0130], [0786]-[0793]
                                 EP 1860149 A1
                                 CN 101142272 A
                                 KR 10-2007-0112153 A
                                 JP 2007-186664 A
                                 JP 2007-186665 A
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006265281 A
- JP 2009013424 A
- JP 2007186664 A
- WO 2004087775 A

**Non-patent literature cited in the description**

- Apparatus and Containers and Packaging D, 2, (2) 4. Specification and Standards for Synthetic-Resin Apparatus, Containers, or Packaging. Ministry of Health, Labor, 31 March 2006